# EUROPEAN PATENT APPLICATION

(11) **EP 0 875 534 A1**
(43) Date of publication of application: **04.11.1998**
(21) Application number: 97201432.8
(22) Date of filing: 22.05.1997
(51) Int. Cl.: C08L 23/00, C08L 9/00, C08L 53/00, C08L 77/00

(54) **Thermoplastic elastomer composition adhesion to polar materials**

(30) Priority: 02.05.1997 US 92319 P
(71) Applicant: DSM N.V., 6411 TE Heerlen (NL)
(72) Inventor: Sadeghi, Mohammed Reza, Leominster, MA 01453 (US); Brzoskowski, Ryszard, Acton, Massachusetts, 01718 (US)

(57) **Abstract**

The invention relates to an adhesive thermoplastic elastomer composition comprising a blend of a thermoplastic resin and a rubber. The invention resides in that the composition also comprises an adhesion promotor in the form of a reaction product of a functionalized thermoplastic rubber and a polyamide.

## Description

### BACKGROUND OF THE INVENTION

### 1. Field of the Invention

This invention deals with a thermoplastic elastomer composition having improved adhesion to polar materials, e.g. polar substrates, without requiring pre-treatment of such polar materials or the use of additional adhesives.

### 2. Description of Related Art

Thermoplastic elastomers are typically materials which exhibit properties between those of crystalline or glassy plastics and sort elastomers. To be considered thermoplastic they must soften upon heating, such that in the molten state they are capable of being shaped by injection molding or extrusion.

Blends or alloys of plastic and rubber have become increasingly important in the production of high performance thermoplastic elastomers, particularly for the replacement of thermoset rubber in various applications. Among the more commercially relevant thermoplastic elastomers are based on physical blends of plastics and rubbers.

Various blended products are described in U.S. Patent Nos. 3,806,558, 3,835,201, 3,957,919, 4,130,535 and 4,311,628. These patent documents generally concern compositions which are comprised of polyolefin resins containing either uncured, partially cured, or fully cured polyolefin rubbers. According to these patent documents further improvements in physical properties such as tensile strength, elongation, and compression set are achieved when the rubber phase is well dispersed into small particles of fixed size. This occurs by curing the rubber in its dispersed state without curing the plastic phase so as to maintain its thermoplasticity.

These thermoplastic elastomer compositions are non-polar in nature. Consequently, ensuring that such materials adhere to a polar material presents a considerable challenge. The most common efforts focus on using substrate pre-treatments to improve adhesion or bonding. Industrially practiced pretreatment methods depend on the substrate and include solvent etching, sulfuric acid or chromic acid etching, sodium treatment, ozone treatment, flame treatment, UV irradiation, and plasma treatment. These procedures are costly, use hazardous materials, result in product degradation, and create environmental hazards.

Still other efforts include those described in U.S. Patent No. 4,957,968, the complete disclosure of which is incorporated herein by reference, in which adhesive thermoplastic elastomer compositions comprised of blends of thermoplastic elastomer (TPE) containing about 15 to 40 wt.% of grafted maleic anhydride polypropylene are applied to substrates. The maleic anhydride apparently functions as a means for introducing polarity into the formulation and to react with other reactable functional groups. In the case of bonding to a polyamide-based substrate, both substrate and the TPE adherent must be in the molten state to initiate the covalent bonds necessary for the adhesion. Adhering to a cold substrate using this so-called adhesive thermoplastic elastomer is generally unsuccessful. Little or no covalent bonds will form at the interface and the adhesion is therefore inadequate.

Another effort is detailed in the PCT International Patent publication WO 95/26380. According to this patent publication, adhesive thermoplastic elastomer compositions can be comprised of blends of thermoplastic elastomers with a reaction product of a functionalized polyolefin and a polyamide. These adhesive thermoplastic elastomers are said to provide improved surface properties and to adhere to engineering resins such as nylon. The improvement asserted over the U.S. Patent No. 4,067,068 is that maleated PP is grafted with low molecular weight polyamide to form an adhesion promoter (grafted nylon-MAH-PP). This grafted nylon-MAH-PP then is blended with the selected thermoplastic elastomer to yield the so-called adhesive product. In this case, the need for temperature-dependent covalent bonding across the interface between the composition and a polar material (engineering resin etc.) is eliminated and the polar segment of dispersed nylon phase provides adhesion. Based on the Examples, the disclosed adhesive thermoplastic elastomer compositions would appear to be capable of bonding to Nylon 6.

However, the above-mentioned efforts suffer from some serious drawbacks. One deficiency is that blending the grafted nylon-MAH-PP with the selected thermoplastic elastomer results in a substantial increase in the overall hardness of these thermoplastic elastomers which is on the order of about 15 points (Shore A hardness). To maintain the starting hardness of the thermoplastic elastomer, common additives such as a block copolymer of styrene/conjugated diene/styrene is used. Compensating for the increase in hardness by starting from or adding amounts of a lower hardness thermoplastic elastomer results in a product exhibiting an inferior combination of physical properties.

Therefore a need remains for a composition which is capable of being adherent to a substrate, such as a polar substrate, without requiring pre-treatments while avoiding the disadvantages associated with the alternatives noted hereinabove.

### Summary of the Invention

An object of the present invention is to provide a thermoplastic elastomer product having improved adhesion to polar materials, e.g. polar substrates.

Another object of the present invention is provide a thermoplastic elastomer composition adapted for adhering to a polar substrate in which the addition of a chemical adhesion promoter does not substantially increase the hardness of the thermoplastic elastomer composition.

An additional object of the present invention is to provide a thermoplastic elastomer composition in which the adhesion promoter has a lower hardness than the known adhesion promoters for use in thermoplastic elastomer applications.

A further object of the present invention is to provide a thermoplastic elastomer composition in which a higher hardness thermoplastic elastomer starting material can be used without unacceptably degrading the properties of the final adhesive composition.

Yet another object of the present invention is to provide a thermoplastic elastomer composition adapted for adhering to a polar material, e.g. substrate, which exhibits a better combination of properties than obtained with the heretofore known comparable compositions.

A still further object of the present invention is an over molded article comprised of a substrate having at least one over molded layer formed from the present composition.

These and other objects are achieved with the present invention in which a thermoplastic elastomer composition having improved surface adhesion properties is obtainable by the incorporation of the reaction product of a functionalized thermoplastic rubber, such as a maleic anhydride graft functionalized thermoplastic rubber, with at least one polyamide into a thermoplastic elastomer. The resultant product has improved adhesion to polar materials.

### BRIEF DESCRIPTION OF THE FIGURES

Figure 1 shows a plaque mold for a peel test in which a metal insert and substrate have been placed.

Figure 2 shows an over molded sample with a tensile bar for a peel test.

### DETAILED DESCRIPTION OF THE INVENTION

A composition according to the present invention can comprise a combination of a thermoplastic elastomer with the reaction product of a functionalized thermoplastic rubber segment, such as, for instance, a maleated thermoplastic rubber triblock or block copolymer, with at least one polyamide ("PA"). The composition can therefore comprise
a) a thermoplastic elastomer which can be fully or partially cross-linked;
b) an adhesion promoter, which may, if desired, still be reactive, and contains at least a soft rubber segment and a polyamide segment, such as a grafted terpolymer obtained by reaction of functionalized-SEBS with polyamide; and, optionally,
c) common additives.

### A) Thermoplastic Elastomer

The thermoplastic elastomer is a two phase system. The continuous phase comprises thermoplastic resin, and the preferably uniformly dispersed phase comprises partially or fully cross-linked rubber particles.

The thermoplastic elastomer can, for present purposes, be described as a thermoplastic olefinic elastomer (TPOE), e.g., a composition comprised of a polyolefn matrix phase and a rubber as the dispersed phase.

The thermoplastic olefinic component in the thermoplastic olefinic elastomer can include thermoplastic crystalline polyolefin homopolymers and copolymers. These polyolefins can be prepared from monoolefin monomers having from 2 to 7 or more carbon atoms. Suitable such monolefins include ethylene, propylene, 1 -butene, iso-butylene, 1-pentene, 1-hexene, 1-octene, 3-methyl-1-pentene, 4-methyl-1-pentene, 5-methyl-1-hexene, a mixture of any thereof, and copolymers thereof with (meth)acrylates and/or vinyl acetates. The monoolefins having from 3 to 6 carbon atoms may be preferred, and of these propylene is readily available.

The relative amount of polyolefin to rubber (matrix to dispersed phase) can generally be from about 8 to about 90 weight percent polyolefin. The amount of polyolefin can be varied, but is typically in the range of about 10 to about 60 percent by weight of the thermoplastic elastomer component.

In principle, the dispersed phase in a suitable thermoplastic olefinic elastomer can be any rubber known to those skilled in the art. For instance, the rubber can comprise at least one copolymer rubber (e.g., ethylene-propylene rubber, EPR), a terpolymer of ethylene, propylene and non-conjugated diene (EPDM), and/or butyl rubber. As evident, in general, the rubbers can include butyl rubber (copolymer as well as terpolymers, and also in its halogenated form); ethylene/α-olefin copolymer rubber (EAM) as well as ethylene/α-olefin/diene terpolymer rubber (EADM); acrylonitrile/butadiene rubber (NBR); styrene/butadiene rubber (SBR); natural rubber (NR). In case of EAM or EADM rubber, the α-olefin in such a rubber is preferably propylene; in such a case the rubber is referred to as EP(D)M.

A thermoplastic olefinic elastomer is called a thermoplastic olefinic elastomer vulcanizate (TPOEV) herein when the rubber in the TPOE has a degree of vulcanization such that the amount of extractable rubber is less than 90% The test to determine such an extractable amount is generally done with a solvent in which the polyolefin as well as the not-vulcanized rubber are soluble. A suitable solvent is boiling xylene. In principle, the rubber in the TPOEV is preferably vulcanized to the extent that the amount of extractable rubber is less than 15%, more preferred even less than 5%.

By vulcanizing the rubber in a TPOE, the physical properties of the resulting TPOEV, as well as the physical properties of the resulting over molded polymeric article are improved.

The thermoplastic elastomer can be fully or partially cured with various vulcanization systems. The rubber in a TPOE can be vulcanized with any vulcanization system that is known in the art. For instance, in the case of EA(D)M-rubber sulphur systems, peroxide systems and preferably vulcanization systems based on a phenolic resin are used. In general, suitable vulcanization agents and systems are described in Hoffman, 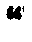 Vulcanization and Vulcanizing Agents 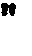 , Palmerton Publ. Co, N.Y., 1967, and in U.S. Patent No. 3,806,558 and U.S. Patent No. 5,021,500, the complete disclosures of which are incorporated herein by reference.

The present thermoplastic elastomer composition which is capable of adhering to polar substrates contains an amount of at least one thermoplastic elastomer sufficient to impart rubber-like elasticity to the composition. Rubber-like means elastomeric properties, and greater softness than polypropylene or polyethylene.

### B) Adhesion Promoter

The adhesion promoter can comprise a grafted terpolymer, e.g. the reaction product of the functionalized polymeric soft segment, such as one based on a functionalized SEBS, with at least one polyamide. The adhesion promoter can be combined with at least one thermoplastic olefinic elastomer in an amount sufficient to improve the adhesion of the resultant composition to a polar material, e.g. polar substrate.

The thermoplastic rubber segment in the adhesion promotor can be at least one a block-copolymer, which can include a triblock copolymer, such as a copolymer having polystyrene end blocks, and poly (ethylene/butylene) midblocks, e.g. a styrene-α-olefin/other α-olefin-styrene block copolymer, as well as styrene-butadiene-styrene and styrene-isoprene-styrene copolymers. Generally the block-copolymer may contain about 10 to about 50 weight % of the "elastomer" segment (non-aryl α-olefin) e.g., a "mid block".

Optionally the block-copolymer may further be compounded with a polyolefin or a common additive mixture thereof.

The thermoplastic rubber segment is functionalized with functional groups such as carboxylic acids and derivatives thereof, including acid anhydrides, acid chlorides, isocyanates, oxazolines, amines, hydroxides and epoxides. The reactive functionalized soft segment can be prepared according to methods known to those skilled in the art. Various techniques for effecting functionalization can be used, including those described in Xanthus (editor), Reactive Extrusion (Hanser 1992), the complete disclosure of which is incorporated herein by reference. By present preference, the thermoplastic rubber segment is functionalized with at least one type of anhydride, and most preferably maleic anhydride. Suitable materials can be made or can be obtained commercially, such as Kraton FG 1901X and Kraton Rubber FG 1924X brand functionalized copolymers.

As used herein, the term SEBS-MAH refers to a maleated styrene-ethylene/butylene-styrene block copolymer.

The polyamides which can be effectively reacted with a functionalized thermoplastic rubber, such as SEBS-MAH, are, in principle, not restricted. The polyamide can comprise one or more of the known polyamides. The polyamide is preferably at least one selected from among polymers formed from caprolactam, aminocaproic acid, enantholactam, 7-amino-heptanoic acid, 11-aminoundecanoic acid, or the like, or polymers obtained by polycondensation of suitable diamines (such as butane-diamine, hexamethylenediamine, nonamethylenediamine, undecamethylenediamine, dodecamethylenediamine, m-xylenediamine, and the like) with suitable dicarboxylic acids (such as terephthalic acid, isophthalic acid, adipic acid, sebacic acid, dodecanedibasic acid, glutaric acid, etc.), copolymers thereof or blends thereof. Specific examples include aliphatic polyamid resins (such as polyamide 4.6, polyamide 6, polyamide 6,6, polyamide 6,10, polyamide 11, polyamide 12, and polyamide 6,12) and aromatic polyamide resins (such as poly(hexamethylenediamine terephthalamide), poly(hexamethylene isophthalamide), xylene group-containing polyamides and amorphous polyamide). Polyamide 6, polyamide 6.6, and polyamide 12 are preferable, and of these the polyamides known as Nylon 6 and Nylon 6,6 are presently preferred.

In general, polyamides are described in Ullmann's Encyclopedia of Industrial Chemistry, volume A21, pages 179-205 (VCH Pub. 1992), Encyclopedia of Polymer Science and Technology, volume 10, pages 483-597 (John Wiley 1969), Encyclopedia of Polymer Science and Technology, volume 19, pages 454-518 (4th Ed., John Wiley 1996), and Encyclopedia of Polymer Science and Engineering, volume 11, pages 315-381 (John Wiley 1988), the complete disclosures of which are incorporated herein by reference.

The molecular weight of the polyamide is, in principle, not restricted. For instance, the polyamide can have a relatively low number average molecular weight in the range of about 10,000 to about 40,000. Good results have been obtained with polyamides having molecular weights in the range of 15,000 to about 35,000.

In a presently preferred embodiment, the adhesion promotor can be prepared by a condensation reaction of at least one functionalized thermoplastic rubber with at least one polyamide. By preference, the functionalized thermoplastic rubber is a functionalized SEBS, such as SEBS-MAH. The amount of SEBS functionalization, e.g., amount of introduced functionality (groups), is preferably approximately 0.2 to 12 wt%, most preferably approximately 2 wt% to 5 wt.%. The actual amount can be varied, such as to match relative functionality of the polyamide.

The copolymer formed from the at least one functionalized thermoplstic rubber segment and the polyamide can first be prepared. For instance, at least one polyamide and a functionalized SEBS can be reacted in the melt in a extruder at a temperature above the melting point of the polyamide. The extruder can be a single or double screw extruder. The thus prepared adhesion promoter can then be melt-mixed or dry-blended with the thermoplastic elastomer composition. An adhesion promoting amount of the grafted terpolymer can therefore be melt-mixed or dry blended with the selected thermoplastic elastomer(s) which can be of the desired hardness. This melt-mixing can be made either on down-stream during manufacturing of the thermoplastic elastomer or in a second pass in a Banbury, single or double screw extruder. Alternatively the functionalized thermoplastic rubber segment and polyamide can be melt mixed with the thermoplastic' elastomer composition in one step.

In the adhesion promoter, the amount of the functionalized thermoplastic rubber is preferably about 10 to about 90 weight % and the amount of the polyamide is about 90 to about 10 weight %. However, the amount of the functionalized segment can be about 30 to about 60 weight %. All amounts based on the total weight of the adhesion promotor. In general, by incorporating grafted SEBS-MAH-PA at levels of about 2 to about 60 wt%, relative to the TPE, into TPE, and more particularly about 10 to about 30 wt%, adhesion improvements from the dispersed polyamide phase through co-crystallization and hydrogen bonding with the substrate material are obtainable.

In principle, a SMA-type polymer can be combined with the adhesion promoter in the formulation of the "adhesively modified" TPE. SMA-type coploymers are described in the Encyclopedia of Polymer Science and Engineering, volume 16, pages 77-78 (including citations) (1989) and maleic polymers, including SMA-types, are described in Encyclopedia of Polymer Science and Engineering, volume 12, pages 225-294 (1989), the complete disclosures of which are incorporated herein by reference. The amount of SMA-type polymer added can be varied, but is preferably in a small amount relative to the formulated composition. In general it will be also be low relative to the amount of the adhesion promoter described elsewhereherein.

### D) Additives:

The present thermoplastic elastomer composition can include, if desired, one or more additives. The particular additive or additive package (a combination of additives) selected will depend on the final end-use application of the present composition. Suitable additives include, among others, reinforcing and non-reinforcing fillers, fibers (glass, carbon fibers or carbon fibrils), processing oils, extender oils, plasticizers, waxes, stabilizers, antioxidants, cross-linking agents, processing aids, lubricants, foaming agents, flame retardant packages, pigments and other coloring agents. Fillers and extenders which can be utilized include conventional inorganic substances, such as calcium carbonate, clays, silica, talc, titanium dioxide, carbon black and the like. Some materials, such as some fillers, can serve a plurality of functions. For instance, antimony trioxide can function as a filler and also provide, preferably in combination with other materials, some flame retardancy to the present thermoplastic composition. In general, suitable rubber processing oils are paraffinic, naphthenic or aromatic oils derived from petroleum fractions. The type of the oil selected can be one that ordinarily is used in combination with the specific rubber or rubbers in the present composition. These additives can comprise a significant amount of the total formulated composition. More particularly, when present, one or more additives can be present in amounts greater than 0 wt.% up to approximately 70 wt.%, and more generally up to about 50 wt.%, relative to the complete formulated composition. For instance, some formulations can include processing oils, flame retardants, and other additives, which in the aggregate are present in an amount on the order of approximately 70 wt.%.

Additives, including fillers and the like, are further described in the Rubber World Magazine Blue Book, and Gäehter et al., Plastics Additives Handbook, (Hanser 1990), the complete disclosures of which are incorporated herein by reference.

### E) Polar Materials - Substrates:

The present thermoplastic elastomer composition can be applied to a diverse range of substrates. The substrates can include, for instance, polar substrates such as those based on polar polymers, such as engineering resins, and inorganic materials, such as glass or metal. Suitable engineering resins include various polyamides of which Nylon 6 and Nylon 66 are exemplary. It is not necessary for the polar substrate to be chemically reacted with the applied composition.

Polymeric substrates, e.g. a polar material, can include automotive parts, such as body panels comprised of polymeric compositions, such as blends, semi-interpenetrating polymer networks, or full interpenetrating polymer networks, which can contain, for instance, polar polymers (polyamides etc.) alone or in combination with additional polymers such as polyureas or polyurethanes. A sufficiently polar polymeric substrate is adherent to a composition according to the present invention.

Certain support members, such as tubular or even solid form, which are susceptible to corrosion can be suitably coated with an adherent layer(s) formed from the present composition. Illustrative such support members include steel tubes. The present composition can be extruded over such a substrate, or applied to the substrate in a fluidized bed process.

Other useful products include those having engineering substrates but which require a softer hand feel, such as knife handles, power and hand tool covers and handles and the like. For instance, the present compositions are readily formulated for over molding at least a portion of drill handle casings of nylons or other engineering substrates. The drill handles can be for smaller hand drills, larger industrial fastener tools, or other power tools. Over molding can be accomplished in different manners including co-extrusion over molding.

The present invention therefore further includes articles comprising a substrate in combination with one or more layers which are formed, in whole or in part, from the present composition. The substrate can be covered in whole or in part with one or more layers. Such articles include drill handles, automobile parts (metal or polymeric substrates), and the like.

All patents, publications and other literature cited herein are each completely incorporated herein by reference.

The following non-limiting Examples further describe the present invention.

### EXAMPLES

The term SEBS-MAH means a maleated styrene-ethylene/butylene-styrene block copolymer. The SEBS-MAH used in the Examples contained about 1-2 % maleic acid anhydride. Maleated copolymers, such as the Kraton® brand copolymers (Shell Chemical) FG-1901X (2% maleic anhydride) and FG-1924X, are suitable.

The term MAH-EPDM means a maleated ethylene propylene diene polymer and in the Examples a MAH-EPDM which contained about 2% maleic anhydride was used. This is commercially available from Uniroyal as "Royaltuf 485."

The term PA means polyamide. The term PA6 means a Nylon 6. Suitable Nylon 6 polyamides include those sold under the trade designation Ultramide® B3, B35, B4 and these are available from BASF.

Glass reinforced polyamides are suitable for use in the present invention as substrates. Different grades of glass reinforced toughened nylons are available from DSM including Akulon J-7/33 brand Nylon 6 and Aukulon J-70/30 brand Nylon 66.

EPDM-MAH-PA designates a grafted product of MAH-EPDM with a polyamide.

The term SEBS-MAH-PA means the reaction product of MAH-SEBS with at least one polyamide.

The term TPE means a thermoplastic elastomer product, such as Sarlink® 3160B brand TPE from DSM TPE. The latter exemplary TPE has a Shore A durometer hardness of 60.

The adhesion between a thermoplastic elastomer composition according to the present invention and various substrates, such as a toughened nylon-based material, were evaluated. In general, the present compositions can be insert injection molded over the substrates at suitable process conditions.

The sample preparation and the test methodology for determining peel strength adhesion performance are as follows.

### Peel Test Methodology

This test determines the amount of force in Newtons required to peel an over molded sample formed from the test composition from a selected substrate. The substrate is prepared by molding 4" X 4" X 1/8" plaques under conditions appropriate for the selected substrate material. The molded plaque is cut diagonally to form two equally sized triangular samples.

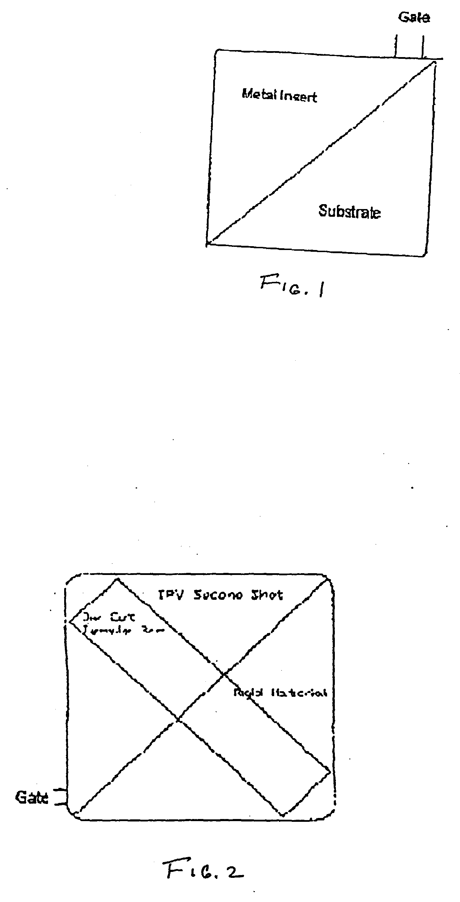

A triangular metal insert having the dimensions corresponding to the triangular substrate sample fills the mold space adjacent to the substrate sample in a four inch by four inch plaque mold (depth 0.25 Inch). The selected base composition ("adhesively modified TPE") including the adhesion promoter is molded over both the substrate sample and metal insert. The melt temperature and mold temperature are selected to be appropriate for the base composition. The metal insert is then removed from the sample. The sample is then allowed to set for about 24 hours. A tensile bar 1.0 inch in width is cut completely through the over molded composition, but not through the substrate as shown in Figure 2.

The peel test commences by starting to peel by hand the over molded composition from the substrate. An Instron Tensile Tester (Model 1130) equipped with a sliding grip (peel mode) is set to Peel/Tear Standard program, and the samples are evaluated with such device. Actual values (values in Newton ("N")) are determinable, for instance, by using an average line through the curve plotted from the data points (ignoring false peaks). The value is divided by the linear length to obtain a N/cm peel force reading. The results can be reported together with the melt temperature of the present composition and the mold temperature.

The adhesion between the adhesively modified thermoplastic elastomer composition of the present invention and various substrates, such as an engineering resin substrates (e.g. a nylon 6 or a toughened glass reinforced nylon 6) was evaluated. The TPE containing the adhesion promoter was insert injection molded on each of the substrates. Nylon-type substrates were used, and these were pre-heated in an oven to a selected temperature and was placed into the plaque mold cavity. The adhesively modified TPE (e.g. TPE containing the adhesion promoter) was then injection over molded on the substrate at a seleted melt temperature. The injection over molding was conducted using an Engel 40 Ton apparatus.

The Examples hereinbelow various products over molded products are reported. Unless stated otherwise, these products were prepared as described in the precedent paragraph(s).

### Example 1

The composition of various grafted materials made on a twin screw extruder is reported in Table 1. These compositions were based on 50 wt%/50wt% of the SEBS-MAH and PA in the adhesion promoter. However, the relative amounts can be varied and still fall within the scope of the present invention.

The twin screw extruder was a 34 mm co-rotating extruder (Leistritz Mfg.). The melt temperature during extrusion was about 25^{0C} above the melting point of Nylon 6. During the grafting operation, the extruder operated at about 250 to 300 rpm, althought the rpm values can be readily varied as appropriate. The first adhesion promoter SEBS-MAH1-PA6, was based on Kraton FG 1924X brand thermoplastic rubber (Shell Chemical), which has a lower relative viscosity and contains about 1 wt.% bound maleic anhydride. The second adhesion promoter, SEBS-MAH2-PA6, is based on Kraton FG1901X, which has a higher viscosity and contains approximately 2 wt. % bound maleic anhydride. The third adhesion promoter EPDM-MAH2-PA6 was based on maleated EPDM and contained about 2 wt. % maleic anhydride (Royaltuf 485 brand maleated EPDM from Uniroyal).

**Table 1**

| Adhesion Promoter | Types of grafted rubber and amount utilized | Type of PA6 and amount used |
|---|---|---|
| MAH1-SEBS-PA6 | MAH1-SEBS (1% MAH), 50% | Ultramid B3, 50% |
| MAH2-SEBS-PA6 | MAH2-SEBS (2% MAH), 50% | Ultramid B3, 50% |
| MAH2-EPDM-PA6 | MAH2-EPDM (2% MAH), 50% | Ultramid B3, 50% |

### Example 2

Table 2 shows peel strength of two formulations containing two types of adhesion promoters melt blended in a Sarlink® 3160B brand TPE from DSM. These materials were insert injection molded over Akulon J-7/33 brand toughened nylon 6 from DSM. The melt temperature was about 293.⁰C and the mold temperature was about 88⁰C. The preheat temperature was about 149⁰C. A higher peel strength value for the adhesion promoter containing about 2% bound maleic anhydride as observed. The standard product had only adhesive failure ("None" in Table 2), whereas the test samples showed cohesive failure, non-interfacial failure.

**Table 2**

| | Standard | Formulation #1 | Formulation #2 |
|---|---|---|---|
| Sarlink® 3160B | 100% | 85% | 85% |
| SEBS-MAH1-PA6 | -- | 15% | -- |
| SEBS-MAH2-PA6 | -- | | 15% |
| Peel Strength, N/cm | None | 34.6 | 41.4 |
| Failure mode | Peels off | Cohesive | Cohesive |

### Example 3

Table 3 shows peel strength of the formulations given in Example 2 as a function of injection over molding conditions. The peel force appeared to decrease when a lowered pre-heat temperature was used.

**Table 3**

| | Peel Strength, N/cm Condition O | Peel Strength, N/cm Condition A | Peel Strength, N/cm Condition B |
|---|---|---|---|
| Formulation #1 | 34.6 | 25.8 | 5 |
| Formulation #2 | 41.4 | 26 | 8 |
| Failure Mode | Cohesive/Adhesive | Cohesive/Adhesive | Adhesive |
| Substrate | Akulon J-7/33 | Akulon J-7/33 | Akulon J-7/33 |
| 1) Over molding Condition O: Melt Temp = 293°C & Preheat Temp = 149°C 2) Over molding Condition A: Melt Temp = 227°C & Preheat Temp = 149°C 3) Over molding Condition B: Melt Temp = 227°C & Preheat Temp = 107°C | | | |

### Example 4

Table 4 shows peel strength of the formulations containing varying levels of SEBS-MAH2-PA6 melted blended in Sarlink® 3160B brand thermoplastic elastomer from DSM. These formulations were evaluated for peel strength according to the test methodology described above. In the sample preparation, the over molding was carried out at a melt temperature of 293°C. The preheat temperature was 149°C. Peel strength increased with increased amount of adhesion promotor.

**Table 4**

| | Formulation #3 | Formulation #4 | Formulation #5 |
|---|---|---|---|
| Sarlink® 3160B | 85% | 80% | 75% |
| MAH2-SEBS-PA6 | 15% | 20% | 25% |
| Peel Strength, N/cm | 39.4 | 43 | 56.6 |
| Failure Mode | Cohesive/Adhesive | Cohesive/Adhesive | Cohesive/Adhesive |
| Shore Hardness | 66.1 | 69.4 | 71 |

### Example 5

Table 5 shows peel strength of formulations containing the same level of SEBS-MAH2-PA6 melt blended into various thermoplastic elastomer grades (different grades of Sarlink® brand thermoplastic elastomers from DSM). The test samples were prepared using the described over molding procedure at a melt temperature of 293°C and at a pre-hat temperature of 149°C.

**Table 5**

| | Formulation #3 | Formulation #6 | Formulation #7 | Formulation #8 |
|---|---|---|---|---|
| SEBS-MAH2-PA6 | 15% | 15% | 15% | 15% |
| Sarlink® 3160B | 85% | -- | -- | -- |
| Sarlink® 3150B | | 85% | -- | -- |
| Sarlink® 4165B | | -- | 85% | -- |
| Sarlink® 4155B | | -- | -- | 85% |
| Peel Strength, N/cm | 39.4 | 34.6 | 33 | 30.3 |
| Shore Hardness | 66.1 | 59.4 | 70 | 64.8 |
| Substrate | Akulon J7/33 | Akulon J7/33 | Akulon J7/33 | Akulon J7/33 |

### Example 6

Table 6 shows peel strength of formulation Number 3, containing the same level of SEBS-MAH2-PA6, insert injection over molded on various substrates at the same condition (Melt blended). This "Condition O" refers to the same over molding processing conditions reported in Example 5. Similar peel strength levels were observed, except for the sample having the Akulon J 70/30 brand nylon 66 substrate (DSM) which showed a peel strength of 68 N/cm.

**Table 6**

| | Formulation #3 | Formulation #3 | Formulation #3 | Formulation #3 |
|---|---|---|---|---|
| SEBS-MAH2-PA6 | 15% | 15% | 15% | 15% |
| Sarlink® 3160B | 85% | 85% | 85% | 85% |
| Substrate | Akulon J-7/33 (PA-6) | Ultramide B35 (PA6) | Capron 8233 (PA6) | Akulon J70/33(PA66) |
| Peel Strength, N/cm @ Condition O | 39.4 | 39.7 | 37.9 | 68 |

### Example 7

Table 7 shows peel strength of two formulations containing another type of adhesion promoter (EPDM-MAH2-PA6) melt blended in Sarlink® 3160B brand TPE from DSM. These materials were insert injection molded over an Akulon J-7/33 based glass reinforced nylon 6 (DSM). The over molding "Condition O" was applied in sample preparation.

**Table 7**

| | Formulation #9 | Formulation #10 |
|---|---|---|
| SEBS 3160B | 85% | 75% |
| EPDM-MAH2-PA6 | 15% | 25% |
| Peel Strength, N/cm | 19.7 | 25.6 |
| Failure Mode | Adhesive | Adhesive |

### Example 8

Table 8 shows physical properties of various formulations of the invention compared to a an adhesive Santoprene© 191-70PA grade product (Monsanto/AES). By comparing a similar hardness material, such as formulation number 3 to the Santoprene 191A-70PA grade product, the composition according to the present invention exhibited an unexpectedly higher tensile strength, elongation at break, and tear force.

**Table 8**

| | Formulation #3 | Formulation #7 | Formulation #8 | Santoprene 191-70PA |
|---|---|---|---|---|
| SEBS-MAH2-PA6 | 15% | 15% | 15% | -- |
| Sarlink® 3160B | 85% | -- | -- | -- |
| Sarlink® 4165B | -- | 85% | -- | -- |
| Sarlink® 4155B | -- | -- | 85% | -- |
| Tensile Strength, Mpa (Strong Dir.) | 4.16 | 5.10 | 4.8 | 3.4 |
| Elongation (%) | 395 | 519 | 528 | 193 |
| Hardness Shore (A) | 66.1 | 70 | 64.8 | 65.7 |
| Tear Force, N | 89 | 98.7 | 89 | 47.7 |

### Example 9

Table 9 comparison of dry blending an adhesion promoter into a Sarlink® 3160B brand thermoplastic elastomer (DSM) at two different levels versus a composition obtained using melt blending. The "Condition O" refers to the over molding "Condition O" as reported herein above in the Examples.

**Table 9**

| | Formulation #3 Melt Blend | Formulation #10 Melt Blend | Formulation #11 Dry Blend | Formulation #12 Dry Blend |
|---|---|---|---|---|
| SEBS-MAH2-PA6 | 15% | 25% | 15% | 25% |
| Sarlink® 3160B | 85% | 75% | 85% | 75% |
| Substrate | Akulon J-7/33 | Akulon J-7/33 | Akulon J-7/33 | Akulon J-7/33 |
| Peel Strength, N/cm @ Condition O | 39.4 | 56.6 | 29.5 | 51.2 |

### Example 10

Table 10 shows the peel strength of formulations containing SEBS-MAH2-PA6 compatibilizer and the components of the compatibilizers are melt blended in a Sarlink® grade brand thermoplastic elastomer molded on Akolon J-7/33 brand glass reinforced nylon 6 (DSM) under over molding Condition O. Formulation number 13 adhesion promoter was prepared in situ during melt blending with the TPE. This hardness tended to increase without a demonstrated advantage in peel strength.

**Table 10**

| | Formulation #3 | Formulation #13 |
|---|---|---|
| Sarlink® 3160B | 85% | 85% |
| SEBS-MAH2-PA6 | 15% | *** |
| PA6 | -- | 7.5% |
| SEBS-MAH2 | -- | 7.5% |
| Peel Strength, N/cm | 39.4 | 25.2 |
| Shore A Hardness | 66.1 | 72 |

### Example 11

Table 11 shows the peel strength comparisons of blending SEBS-MAH, PP-MAH (Polybond 3150 brand maleated polypropylene from Uniroyal Chemical) and SEBS-MAH2-PA6 into Sarlink® 3160 brand TPE at the same level. The Condition O is as earlier reported.

**Table 11**

| | Formulation #3 Melt Blend | Formulation #14 Melt Blend | Formulation #15 Melt Blend |
|---|---|---|---|
| Sarlink® 3160B | 85% | 85% | 85% |
| SEBS-MAH2-PA6 | 15% | -- | -- |
| SEBS-MAH2 | -- | 15% | -- |
| Polybond 3150 | -- | -- | 15% |
| Substrate | Akulon J-7/33 | Akulon J 7/33 | Akulon J 7/33 |
| Peel Strength, N/cm @ Condition O | 39.1 | 6 | 19.7 |

## Claims

1. Adhesive thermoplastic elastomer composition comprising a blend of a thermoplastic resin and a rubber, characterised in that the composition also comprises an adhesion promotor in the form of a reaction product of a functionalized thermoplastic rubber and a polyamide.

2. Composition according to claim 1, characterized in that the functionalized thermoplastic rubber is a styrene based blockcopolymer.

3. Composition according to claim 2, characterized in that the styrene based blockcopolymer is a styrene-ethylene-butylene-styrene blockcopolymer.

4. Composition according to claim 1, characterized in that the functional group in the functionalized thermoplastic rubber is an anhydride.

5. Composition according to anyone of claims 1-4, characterized in that the amount of functional groups in the functionalized thermoplastic rubber is in the range of between 0.12 and 12 wt.%.

6. Composition according to anyone of claim 1-6, characterized in that the amount of polyamide in the adhesion promotor is in the range of between 10 - 90 wt.%.

7. Composition according to anyone of claim 1-6, characterized in that the rubber in the composition is selected from the group comprising EPR, EPDM, NBR, SBR and butyl rubber.

8. Composition according to anyone of claim 1-7, characterized in that the rubber in the composition is vulcanized to the extend that the amount of extractable rubber is at most 15 %.

9. Composition according to anyone of claims 1-8, characterized in that the rubber in the composition is vulcanized to the extend that the amount of extractable rubber is at most 15%.

10. Composition according to anyone of claims 1-9, characterized in that the thermoplastic resin is a polypropylene homo- or copolymer.

11. Composition according to anyone of claims 1-10, characterized in that the polyamide is selected from the group comprising Nylon-6, Nylon-6,6 and Nylon-12.

12. Composition according to anyone of claims 1-11, characterized in that the polyamide has a number average molecular weight in the range of between 15,000 and 40,000.

13. Composition according to anyone of claims 1-12, characterized in that the adhesion promotor is present in the range of between 5-60 wt.%.

14. Composition according to claim 13, characterized in that the adhesion promotor is present in the range of between 10 and 40 wt.%

15. Overmolded article, comprising a substrate, overmolded with a composition according to anyone of claims 1-14.

16. Article according to claim 15, characterized in that the substrate comprises nylon.
